Europäisches Patentamt

European Patent Office

Office européen des brevets

(19)

(11) Publication number: **0 070 619**
A2

## (12) EUROPEAN PATENT APPLICATION

(21) Application number: **82302906.1**

(22) Date of filing: **04.06.82**

(51) Int. Cl.³: **F 02 D 35/00,** F 01 N 3/20, F 02 D 37/02

(30) Priority: **16.07.81 US 283877**

(43) Date of publication of application: **26.01.83** Bulletin 83/4

(84) Designated Contracting States: **AT BE CH DE FR GB IT LI LU NL SE**

(71) Applicant: **JOHNSON MATTHEY, INC.,, 4 Malin Road, Malvern Pennsylvania 19355 (US)**

(72) Inventor: **Enga, Bernard Edvard, 1393 Bittersweet Lane, West Chester Pennsylvania 19380 (US)**

(74) Representative: **Arthur, Bryan Edward, Withers & Rogers 4 Dyer's Buildings Holborn, London EC1N 2JT (GB)**

(54) Regenerating diesel emissions control devices.

(57) A method and apparatus for regenerating a catalyzed particulate filter (10) in the exhaust stream (27) of a combustion source (particularly a diesel engine 25) are provided that do not necessitate heating of the exhaust stream from the combustion source. Unburnt fuel is supplied to the filter (10), in a variety of ways, above the light-off temperature of the filter, causing an exotherm which ignites the particulates stored by the filter (10).

# REGENERATING DIESEL EMISSIONS CONTROL DEVICES

## BACKGROUND AND SUMMARY OF THE INVENTION

Exhaust streams from combustion sources, particularly from diesel engines, desirably have particulate filters disposed therein to clean the exhaust stream. In order to provide effective long-life of such filters it is necessary to occasionally remove the particulates stored thereby. Conventionally, such as shown in U.S. Patent 4,211,075, this is accomplished by a regenerator system which ignites the stored particles, burning them off, and thus cleaning the filter. The majority of such systems act to raise the exhaust temperature to a level at which the particulates ignite. This is done primarily either by throttling the air intake or by igniting a pilot burner to actively raise the exhaust gas temperature.

According to the present invention a method and apparatus are provided for known regenerating catalytically coated particulate filters. According to the present invention it is desirable to provide regeneration of such filters without effecting a rise in the exhaust gas temperature. Rather, ignition and burn off of the stored particulates is effected -- according to the invention -- by supplying a quantity of fuel to the filter sufficient for the catalyst to generate an exotherm, igniting the particulates and cleaning the filter. The catalyst coating on catalyzed filters develops an exotherm when oxidizable fuels such as carbon monoxide and gaseous hydrocarbons, in the presence of sufficient oxygen, are presented to the catalyst, the exotherm generated depending upon the quantity of fuel supplied and also the catalyst activity.

The invention may be practiced with any catalyzed particulate filter associated with an exhaust stream from a combustion source. However, the invention is particularly applicable to exhaust streams from diesel engines. The invention is primarily practiced by presenting to a catalyzed filter gaseous fuel emissions from the combustion source that are above the filter's "light-off" temperature. The "light-off" temperature of a catalyzed filter differs from filter to filter and may be determined experimentally. For instance, a portion of a catalyst may be heated, gradually raising the temperature, together with particulate matter collected from the exhaust gas stream of a combustion source in the sample pan of a differential scanning colorimeter in an atmosphere of 1% oxygen and argon. Samples of the atmosphere above the sample pan are taken via a heated capillary tube to a mass spectrometer. Four mass numbers are traced, carbon monoxide, doubly charged argon, oxygen and water or nitrogen, and carbon monoxide. The temperature at which the differential plot of the differential scanning colorimeter peaks is taken to be the temperature at which the combustion of the particles took place, and this temperature is the "light-off" temperature.

According to one aspect of the present invention, a method of regenerating a catalyzed particulate filter disposed in the exhaust stream from a combustion source operated by a fuel supply is provided. The method comprises the step of: during operation of the combustion source, presenting to the catalyzed filter above its light-off temperature gaseous uncombusted fuel sufficient to generate an exotherm so that the catalyzed filter heats up and ignites stored particulates in the filter over a period of time sufficient to burn up a substantial quantity of particulates stored in the filter.

According to another aspect of the present invention, a method of regenerating a catalyzed particulate filter of an internal combustion engine (preferably diesel engine) is practiced. The method comprises a step of, during operation of the engine, occasionally supplying fuel to the engine-filter system so that an amount of uncombusted fuel sufficient to ignite stored particulates in the filter is supplied to the filter. The fuel-supplying step may be practiced periodically, or automatically in response to back-pressure from the filter, and when it is practiced it is preferably practiced for at least several seconds so that a substantial amount of the stored particulates are burned up and the filter regenerated. The fuel-supplying step may be practiced in a number of different ways. One way is to inject the fuel directly into the exhaust stream -- prior to the catalyzed filter. Another way is to control the timing of the fuel introduction into the engine for a predetermined period of time so that a predetermined quantity of fuel will not fully combust; of course after passage of the predetermined period of time the timing is controlled so that substantially all of the fuel introduced into the engine does combust.

Another way of particularly practicing the method according to the invention is to supply the fuel to the engine cylinders in a particular manner.

The engine will include a first piston and a first cylinder that is substantially at top dead center while a second piston in a second cylinder is substantially at bottom dead center. The fuel-supplying step is then practiced by supplying a part of the fuel from a fuel line leading to the first cylinder to the second cylinder near bottom dead center on the power stroke of the second piston, while supplying the rest of the fuel in the fuel line to the first cylinder near top dead center of the compression stroke. In this way the extra fuel introduced into the second cylinder is "cracked" by the heat and expelled into the exhaust stream, and has a form ideal for generating an exotherm in the catalyzed particulate filter.

Another particular way of practicing the method according to the invention is by controlling the amount of fuel supplied to at least one of the cylinder so that the combustion oxygen is depleted before full combustion of the fuel is effected, leaving a substantial amount of uncombusted fuel in the cylinder exhaust. Of course after catalyzed filter regeneration, the amount of fuel supplied to the engine is controlled so that substantially all of the fuel supplied to each cylinder is combusted.

According to the present invention an apparatus for practicing the different aspects of the method according to the invention, as described above, is also provided. By practicing the present invention it is possible to control the particulates emitted from a diesel engine in a vehicle to about 0.1 grams per mile, and to provide automatic regeneration of the filter without significant driver perception of the regenerator operation.

It is the primary object of the present invention to provide a simple and effective method and apparatus for regenerating a catalyzed particulate filter in a combustion source exhaust stream. This and other objects of the invention will become clear from an inspection of the detailed description of the invention, and from the appended claims.

### BRIEF DESCRIPTION OF THE DRAWINGS

FIGURE 1 is a schematic view illustrating a first embodiment of exemplary apparatus according to the invention;

FIGURE 2 is a schematic longitudinal cross-sectional view of an exemplary catalyzed particulate filter utilizable in the apparatus of FIGURE 1;

FIGURE 3 is a schematic view of other exemplary embodiments of apparatus according to the present invention; and

FIGURE 4 is a schematic view of still another exemplary embodiment of apparatus according to the invention.

### DETAILED DESCRIPTION OF THE DRAWINGS

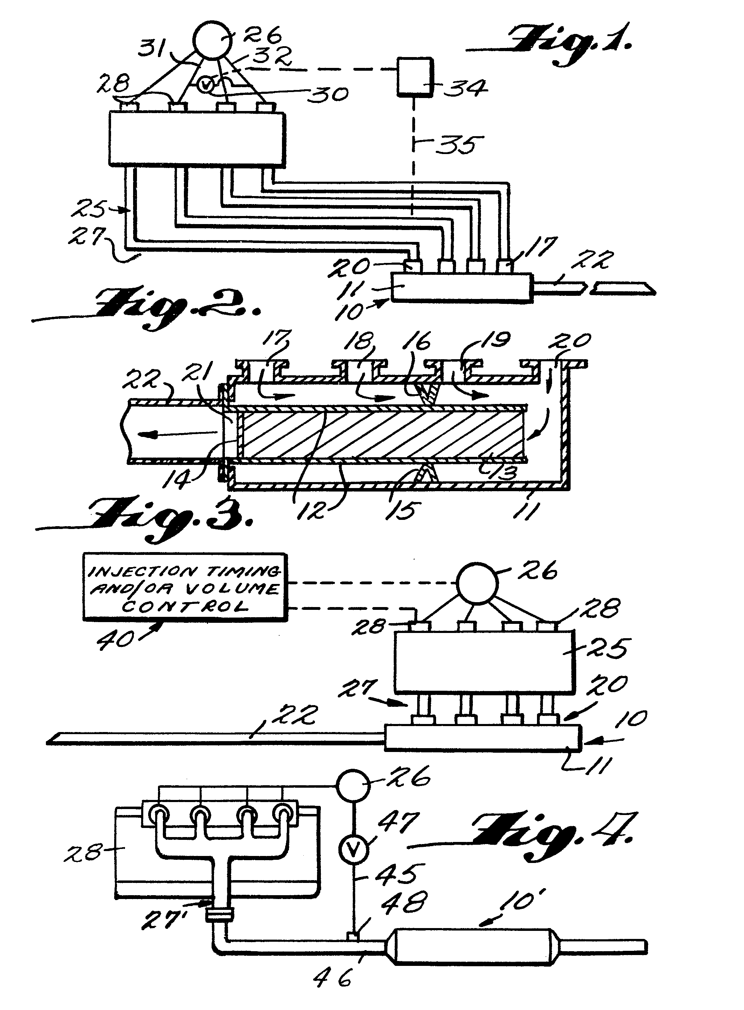

An exemplary catalyzed particulate filter according to the present invention is shown generally by reference numeral 10 in FIGURES 1-3, and by reference numeral 10' in FIGURE 4. The invention can be practiced with any known regeneratable catalyzed particulate filter.

One typical catalyzed particulate filter utilizable according to the present invention, is shown in more detail in FIGURE 2. This filter 10 comprises an outer casing 11 with an interior reaction tube 12 containing a supported catalyst 13. The reaction tube 12 may be mounted within the housing 11 by struts 15, 16, and a retaining bar 14 is placed across the exit from the reaction tube 12 to ensure that the catalyst 13 remains in position. The housing 11 has openings 17, 18, 19 and 20 which are adjacent to and continuous with the exhaust ports of cylinders from an internal combustion engine. A single exit 21 is provided from the housing 11, the exit 21 in communication with exhaust pipe 22. All of the exhaust gases introduced into housing 11 through inlets 17 to 20 are caused to flow through the supported catalyst 13, as indicated by the arrows in FIGURE 2.

The catalyst support 13 may comprise a wide variety of structures, but preferably is a knitted wire mesh which may be fabricated into a single monolith or may be made up in annular sections. A layer of wash coat and a catalytic layer are applied to the mesh either prior to assembly and/or insertion into the reaction tube 12, or once in place within reaction tube 12. The thickness of the wire is preferably between 0.001 and 0.02 inches and may comprise a nickel-chromium alloy; an alloy of iron including at least one of the elements chromium, aluminum, cobalt, nickel, and carbon; or an alloy such as shown in U.S. Patent 3,298,826, or U.S. Patent 3,027,252. The wash coat layer comprises an adherent refractory metal oxide; and the catalytic metal comprising the catalytic layer on the base metal substrate is preferably selected from the group consisting of Ru, Rh, Pd, Ir, Pt, Fe, Co, Ni, V, Cr, Mo, W, Y, Ca, and alloys thereof, and inter-metallic compounds containing at least 20% by weight of one or more of the metals disposed upon the surface or throughout the refractory metal oxide wash-coat layer.

The schematic exemplary catalyzed particulate 10' differs from the filter 10 only in that a single entry port, rather than a plurality of entry ports, is provided.

In FIGURE 1 exemplary apparatus according to the present invention include a combustion source 25 having a fuel supply 26 and exhaust stream 27. Preferably the combustion source 25 comprises a diesel engine, such as a diesel engine in a motor vehicle, and the fuel supply 26 is a fuel injection pump, an injector 28 being associated with each cylinder of the engine 25. The apparatus further comprises means for supplying fuel, during operation of the engine 25, to the engine-filter system so that an amount of uncombusted fuel sufficient to ignite stored particulates in the filter 10 is supplied to the filter 10. That is, the apparatus also includes means for, during operation of the engine 25, presenting to the catalyzed filter 10, above the filter light-off temperature, gaseous uncombusted fuel sufficient to generate an exotherm so that the catalyzed filter 10 heats up and ignites stored particulates in the filter over a period of time sufficient to burn up a substantial quantity of particulates stored in the filter.

In the exemplary embodiment of the fuel-supplying means illustrated in FIGURE 1, such means are illustrated schematically with a four cylinder diesel engine 25 having a firing order of 1, 3, 4, 2 with a valve 30 disposed between the fuel line 31 to the number 2 cylinder, and the fuel line 32 to the number 4 cylinder. The valve 30 comprises a check-valve which allows passage of fuel from fuel line ·31 to fuel line 32, but not vice versa. Additionally, the check-valve 30 may be solenoid operated by control device 34. When control device 34 is actuated the valve 30 is operated so that the valve element operates as a conventional check-valve, while in another position of the control 34 movement of the valve element of the valve 30 is blocked, holding the valve closed. The control 34 for valve 30 may be manual or automatic. For instance, it may be operated after a predetermined amount of time or a predetermined number of revolutions of the engine 35, or -- as illustrated schematically in FIGURE 1 -- it may be controlled by the back-pressure from exhaust stream 27 (as indicated by dotted line 35).

In operation of the apparatus illustrated in FIGURE 1, when controller 34 is actuated to release the valve element of check-valve 30, a part of the fuel in fuel line 31 passes through valve 30 to fuel line 32 when the fourth piston is at bottom dead center on the power stroke, at the same time that fuel is being supplied through line 31 to the second piston near top dead center of the compression stroke, the part of the fuel which passes through valve 30 being injected into the fourth cylinder. This extra fuel is "cracked" by the heat in the fourth cylinder, and then expelled into the exhaust stream 27 (and ultimately inlet port 17 for catalyzed filter 10) on the exhaust stroke of the fourth piston. In this form, the fuel is ideally suited for cooperating with the catalyzed support 13 for igniting stored particulates in the filter 10. Operation is continued until a substantial portion of the stored particulates in filter 10 are burned up. This may be for a predetermined time period (e.g. 90 seconds), or for a predetermined number revolutions of the engine 25 (e.g. a few thousand revolutions), or - in the case of the automatic control system illustrated in FIGURE 1 - until the back-pressure sensed in the exhaust stream 27 is low enough to effect operation of control 34 to block movement of the valve element in the check-valve 30.

Table I below gives the results of a comparison between a conventional engine-filter system operation and an engine-filter system with a regenerator according to the present invention operation. The experimental regenerator system test included a check-valve 30 in an engine-filter system as illustrated in FIGURE 1, except that the check-valve 30 was not controlled by an extraneous source 34, but rather was allowed to function continuously over the length of the test. Testing cycle FTP is the Federal Test Procedure Cycle, while cycle HFET is the Highway Fuel Economy Test Procedure, utilizing different driving cycles. The left hand side of the table gives the results for a four cylinder diesel engine in a motor vehicle with a filter as illustrated in FIGURE 1 only without the check-valve 30, while the results on the right hand side of the table are for the same engine with check-valve 30. The baseline particulate levels indicated are the particulate levels exhausting the engine, but prior to the filter 10. In both cases, the particulate levels after the filter 10 are well below 0.1 grams per mile. Since the filter cleans itself at approximately 350°C, it is apparent from

0070619

the test results that the regenerator illustrated in FIGURE 1 is effective to burn off the stored particulates in the filter when in operation.

TABLE I

| CYCLE | BASELINE PARTICULATE LEVEL g/mi. | NORMAL FILTER MAX. °C | MEAN °C | BASELINE PARTICULATE LEVEL g/mi. | REGENERATION ON FILTER MAX°C | MEAN °C |
|---|---|---|---|---|---|---|
| FTP | 0.159 | 250 | 175 | 0.25 | 350 | 195 |
|  | 0.143 | 245 | 160 | 0.24 | 395 | 205 |
|  | 0.158 | 248 | 163 | 0.25 | 407 | 215 |
| HFET | 0.065 | 280 | 200 | 0.221 | 425 | 350 |
|  | 0.102 | 285 | 217 | 0.203 | 463 | 358 |
|  | 0.108 | 283 | 209 | 0.207 | 433 | 347 |

Another exemplary apparatus according to the present invention is illustrated in FIGURE 3. Again the engine-filter system includes a diesel engine 25 with filter 10, fuel supply 26 and injectors 28 for delivering fuel to the engine 25, and exhaust system 27 from engine 25 to filter 10. In this case, the means for presenting to the catalyzed filter 10 above its light-off temperature gaseous uncombusted fuel sufficient to generate an exotherm comprises the means 40. The means 40 comprises a means for controlling either the timing of fuel introduction to engine 25, or the volume of fuel delivered to engine 25, so that the exotherm in filter 10 is produced. For instance, the means 40 may control the timing of fuel injected through injectors 28 into one or more cylinders so that a predetermined quantity of the fuel will not fully combust. The control means 40 is operable for a predetermined period of time to effect this less than full combustion, but after that predetermined period of time the control means 40 controls the timing so that substantially all of the fuel introduced into the engine combusts (the normal operating mode of the engine 25). Alternatively, the means 40 controls the fuel pump 26 and/or injectors 28 to control the amount of fuel supplied to at least one of the cylinders so that the combustion oxygen is depleted before full combustion of the fuel is effected, leaving a substantial amount of uncombusted fuel in the exhaust system 27. After filter 10 regeneration, of course, the control means 40 controls the amount of fuel supplied so that substantially all the fuel supplied to each cylinder is combusted (the normal operating mode of the engine 25).

FIGURE 4 illustrates yet another embodiment of exemplary apparatus according to the invention, again including a diesel engine 25 with a fuel pump 26 with exhaust system 27' associated with catalyzed particulate filter 10'. In this case, the means for supplying fuel to the engine-filter system so that an amount of uncombusted fuel sufficient to ignite stored particulates in the filter 10' is supplied to the filter 10' includes the line 45 directly from fuel pump 26 to a portion 46 of exhaust system 27' just prior to filter 10'. A valve 47 is disposed in line 45. When the valve 47 is operated, fuel from pump 26 passes through line 45 and is injected by injector 48 into the exhaust conduit 46. Again, an exotherm is generated in filter 10' igniting the stored particulates, valve 47 being kept open for a period of time sufficient to burn up a substantial quantity of particulates stored in the filter 10'.

In both the FIGURE 3 and 4 embodiments, operation of the means for supplying fuel to the

0070619

source-filter system to generate an exotherm in the filter may be manual, periodical, automatic, etc.

The extent of operation, mechanism of operation, etc., is variable depending upon the nature of the combustion source 25, the nature of the catalzyed particulate filter 10, 10' etc. As one example of an operation procedure, however, where the engine 25 is a four cylinder diesel engine for a motor vehicle, the vehicle is accelerated to 55 miles per hour, the regenerator system is operated for 90 seconds while maintaining the 55 mile per hour speed, the regenerator system is turned off, and normal driving ensues. During operation of the regenerator system according to the invention, the driver is not usually able to perceive regenerator operation. Thus, the catalyzed filter is simply and efficiently regenerated without perceptible adverse consequences, and without requiring heating of the exhaust stream.

- 1 -                                    0070619

CLAIMS:

1. A method of regenerating a catalyzed particulate filter of an internal combustion engine characterized by the step of: during operation of the engine (25) occasionally supplying fuel to the engine-filter system (10,10') so that an amount of uncombusted fuel sufficient to ignite stored particulates in the filter is supplied to the filter.

2. A method as claimed in claim 1 characterized in that said fuel-supplying step is practiced automatically in response to back-pressure from the filter (10') and is practiced for at least several seconds.

3. A method as claimed in claim 1 characterized in that said fuel-supplying step is practiced by controlling the timing, for a predetermined period of time, of fuel introduction into the engine (25) so that a predetermined quantity of fuel will not fully combust; and characterized by the further step of, after passage of said predetermined period of time, controlling the timing so that substantially all of the fuel introduced into the engine combusts.

4.   A method as claimed in claim 1 wherein the engine has a plurality of pistons and cylinders including a first piston in a first cylinder that is substantially at top dead center while a second piston in a second cylinder is substantially at bottom dead center; and further characterized in that said fuel-supplying step is practiced by: supplying a part of the fuel from a fuel line leading to the first cylinder to the second cylinder near bottom dead center on the power stroke of the second piston, while supplying the rest of the fuel in the fuel line to the first cylinder near top dead center of the compression stroke of the first piston; and providing a remotely controlled one-way valve (30) between the fuel lines (31,32) to the first cylinder and the second cylinder so that fuel may -- when the valve (30) is remotely actuated -- pass from the first cylinder fuel line (31) to the second cylinder, but not vice-versa.

5.   A method as claimed in claim 1 characterized in that the internal combustion engine (25) has a plurality of cylinders, and wherein said fuel-supplying step is practiced by controlling the amount of fuel supplied to at least one of the cylinders so that the combustion oxygen is depleted before full combustion of the fuel is effected, leaving a substantial amount of uncombusted fuel in the cylinder exhaust; and characterized by the further step of, after catalyzed filter regeneration, controlling the amount of fuel supplied so that substantially all the fuel supplied to each cylinder is combusted.

6.    A method as claimed in any one of claims 1-5 characterized in that said fuel-supplying step is further practiced so that the filter (10,10') generates an exotherm raising the maximum effective temperature in the filter to a minimum of 350°C.

7.    An apparatus comprising:  an internal combustion engine (25) having a fuel supply and an exhaust stream; and a catalyzed particulate filter (10,10') disposed in said exhaust stream; and characterized by

means for, during operation of the engine, presenting to said catalyzed filter, above said filter's light-off temperature, gaseous uncombusted fuel sufficient to generate an exotherm so that the catalyzed filter heats up and ignites stored particulates in the filter over a period of time sufficient to burn up a substantial quantity of particulates stored in the filter.

8.    Apparatus as claimed in claim 7 characterized in that said presenting means comprises means (40) for controlling, for a predetermined period of time, the timing of fuel introduction into said engine so that a predetermined quantity of fuel will not fully combust; and further characterized in that said controlling means(40) further comprises means for controlling the timing so that after passage of said predetermined period of time substantially all the fuel introduced into said engine combusts.

9. Apparatus as claimed in claim 7 further characterized in that said engine has a plurality of pistons and cylinders including a first piston in a first cylinder that is substantially at top dead center while a second piston in second cylinder substantially at bottom dead center; and further characterized in that said presenting means comprises means for supplying a part of the fuel from a fuel line(31) leading to said first cylinder to the second cylinder near bottom dead center on the power stroke of the second piston, while supplying the rest of the fuel in said fuel line to said first cylinder near top dead center of the compression stroke of the first piston.

10. Apparatus as claimed in claim 9 characterized in that said presenting means comprises a remotely controlled one-way valve (30) between the fuel line (31) leading to the first cylinder and the second cylinder so that fuel may -- when the valve (30) is remotely actuated -- pass from said first cylinder fuel line(31) to the second cylinder, but not vice-versa; and further characterized in that said engine comprises a four cylinder diesel engine having a 1, 3, 4, 2 firing order, and wherein said first cylinder is the number 2 cylinder, and said second cylinder is the number 4 cylinder.

11. Apparatus as claimed in claim 7 characterized in that said presenting means comprises means (47) for injecting fuel directly into the exhaust stream -- prior to the catalyzed filter (10') of said diesel engine.

0070619

12. Apparatus as claimed in claim 7 further characterized in that said diesel engine has a plurality of cylinders, and wherein said presenting means comprises means for controlling the amount of fuel to at least one of said cylinders so that the combustion oxygen is depleted before full combustion of the fuel is effected, leaving a substantial amount of uncombusted fuel in the cylinder exhaust; and further characterized in that said presenting means further comprises means for -- after catalyzed filter regeneration -- controlling the amount of fuel supplied so that substantially all the fuel supplied to each cylinder is combusted.

*Fig.1.*

*Fig.2.*

*Fig.3.*

INJECTION TIMING
AND/OR VOLUME
CONTROL

*Fig.4.*